(19) Europäisches Patentamt / European Patent Office / Office européen des brevets

(11) **EP 1 885 532 B1**

(12) **EUROPÄISCHE PATENTSCHRIFT**

(45) Veröffentlichungstag und Bekanntmachung des Hinweises auf die Patenterteilung:
**22.07.2009 Patentblatt 2009/30**

(21) Anmeldenummer: **06742788.0**

(22) Anmeldetag: **04.05.2006**

(51) Int Cl.:
**B27K 3/50** $^{(2006.01)}$

(86) Internationale Anmeldenummer:
**PCT/EP2006/004158**

(87) Internationale Veröffentlichungsnummer:
**WO 2006/122656 (23.11.2006 Gazette 2006/47)**

(54) **FUNGIZIDE MISCHUNGEN**

FUNGICIDAL MIXTURES

MELANGES FONGICIDES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.05.2005 DE 102005022148**

(43) Veröffentlichungstag der Anmeldung:
**13.02.2008 Patentblatt 2008/07**

(73) Patentinhaber: **LANXESS Deutschland GmbH 51369 Leverkusen (DE)**

(72) Erfinder:
- **BRUNS, Rainer**
  **51373 Leverkusen (DE)**
- **KUGLER, Martin**
  **42799 Leichlingen (DE)**
- **JAETSCH, Thomas**
  **50668 Köln (DE)**

(56) Entgegenhaltungen:
**EP-A- 0 208 882       EP-A- 0 254 857**
**EP-A- 0 510 458       WO-A-93/02557**
**NZ-A- 331 830**

- **MATTHIES A ET AL: "EFFECT OF TEBUCONAZOLE (FOLICUR) AND PROCHLORAZ (SPORTAK) TREATMENTS ON FUSARIUM HEAD SCAB DEVELOPMENT, YIELD AND DEOXYNIVALENOL (DON) CONTENT IN GRAINS OF WHEAT FOLLOWING ARTIFICIAL INOCULATION WITH FUSARIUM CULMORUM" ZEITSCHRIFT FUER PFLANZENKRANKHEITEN UND PFLANZENSCHUTZ - JOURNAL OF PLANT DISEASES AND PROTECTION, STUTTGART, DE, Bd. 107, Nr. 1, Januar 2000 (2000-01), Seiten 33-52, XP001246965 ISSN: 0340-8159**

**EP 1 885 532 B1**

**Beschreibung**

Die vorliegende Erfindung betrifft die Verwendung von synergistisch wirksamen Mischungen enthaltend Prochloraz und Tebuconazole, zum Schutz von Holz und Holzwerkstoffen, vor Befall, Schädigung und/oder Zerstörung durch biologische Schädlinge.

Grundsätzlich unterscheidet der Fachmann zwischen einer strukturellen Zerstörung des Holzes durch Basidiomyceten oder durch Moderfäulnispilze, sofern das Holz einer Umgebung mit hoher Feuchtigkeit oder gar Erdkontakt ausgesetzt ist, sowie einer optischen Beeinträchtigung des Holzes durch Holz verfärbende Pilze.

Für eine Verwendung im Holzschutz gegen holzzerstörende Basidiomyceten sind bereits Triazole wie zum Beispiel Tebuconazole (vgl. EP-A 254857) und Cyproconazole (vgl. EP-A 554833) bekannt, deren Wirksamkeit im Labortest alleine zwar vielversprechend ist, unter Praxisbedingungen jedoch nicht immer einen ausreichenden Schutz des Holzes gewährleistet, so dass diese Wirkstoffe in der praktischen Anwendung noch mit Metallen oder Metallsalzen, insbesondere Kupfersalzen kombiniert werden müssen. So werden Triazofungizide in der Praxis häufig mit schwermetallhaltigen Verbindungen wie z.B. Kupferverbindungen kombiniert.

Die Verwendung von schwermetallhaltigen Holzschutzmitteln ist aus ökologischer Sicht jedoch als bedenklich zu beurteilen. Es bestand daher weiterhin Bedarf an verbesserten Holzschutzmitteln, die auf Wirkstoffen beruhen, die ohne Zusatz von Schwermetallen ausreichenden Schutz von Holz gewährleisten.

Der Wirkstoff Prochloraz (N-propyl-N-[2-(2,4,6-trichlorophenoxy)ethyl]imidazol-1-carboxamide) (CAS-Nr. 67747-09-5) ist ein bekanntes Pflanzenschutzfungizid mit relativ breitem Wirkungsspektrum.

Aufgrund der Wirkung von Prochloraz gegen Ascomyceten und Deuteromyceten wurde die Verwendung von Prochloraz zum Schutz gegen Holz verfärbenden Pilze gelegentlich vorgeschlagen (vgl. z.B. EP-A 1025967), ohne das eine solche Wirksamkeit in der Praxis bestätigt werden konnte. Im Gegenteil ist bekannt, dass Prochloraz eine ungenügende Wirkung gegen verbläuende Pilze zeigt (vgl. J.A. Drysdale et al., New Zealand Journal of Forestry Science 1982, 12 (3), 457-466).

Ferner wurde beschrieben, dass Mischungen von Prochloraz mit Tri-n-butylzinnverbindungen geeignet sind um Holz und technische Materialien vor dem Befall durch Mikroorganismen zu schützen (vgl. DE-A 3522788). Weiterhin ist bekannt, dass Prochloraz in Kombination mit NOIT (2-N-octyl-3-isothiazolinon) zum Schutz gegen holzverfärbende Pilze eingesetzt werden kann (vgl. NZ-A 331830). In beiden Fällen muss aufgrund der beschriebenen ungenügenden Wirkung von Prochloraz im Holzschutz davon ausgegangen werden, dass die behauptete Wirkung wesentlich durch die jeweiligen Mischungspartner verursacht wird.

Obwohl Prochloraz in den oben genannten Veröffentlichungen als möglicher Mischungspartner für verschiedene Wirkstoffe zur Verwendung im Materialschutz genannt wird, bleibt festzustellen, dass diese Mischungen in der Praxis aufgrund der genannten ungenügenden Wirkung von Prochloraz bzw. des ungünstigen toxikologischen und ökotoxikologischen Profils der Mischungspartner keine Rolle spielen.

Überraschenderweise wurde gefunden, dass die Kombination des allein nicht ausreichend wirksamen Prochloraz mit Tebuconazole sowohl gegen holzzerstörende Basidiomyceten als auch gegen Moderfäulepilze synergistisch wirkt, d. h. die fungizide Wirkstärke der synergistischen Mischungen ist unerwarteter Weise höher als die Summe der fungiziden Wirkstärke der jeweiligen Fungizide allein.

Durch die synergistische Wirkungssteigerung ergibt sich der zusätzliche Vorteil, dass durch die anzuwendende geringere Menge an Fungizid in einem Holzschutzmittel gemäß der vorliegenden Erfindung nicht nur ein ökonomischer Vorteil erzielt wird, sondern auch das Sicherheitsrisiko für die Umwelt reduziert wird.

Gegenstand der vorliegenden Erfindung ist daher die Verwendung fungizider Mischungen enthaltend eine synergistisch wirksame Menge an Prochloraz und Tebuconazole zum Schutz von Holz, Holzwerkstoffen und Holz-Plastik-Verbundstoffen zum Schutz vor Befall und Zerstörung durch biologische Schädlinge, insbesondere durch holzzerstörende Basidiomyceten und Moderfäulepilze.

Die Gewichtsverhältnisse der Wirkstoffe in der Wirkstoffmischung können in einem relativ großen Bereich variiert werden. Bevorzugt sind Gewichtsverhältnisse von Tebuconazole zu Prochloraz im Bereich 1:99 bis 99:1, besonders bevorzugt von 1:20 bis 20: 1.

Insbesondere bevorzugt sind Wirkstoffmischungen die Prochloraz und Tebuconazole im Gewichtsverhältnis von 9:1 bis 1:9 enthalten.

Die verwendungsgemäßen, synergistischen Mischungen eignen sich zur Bekämpfung von biologischen Schädlingen. Sie sind vor allem wirksam gegen holzzerstörende Basidiomyceten und Moderfäulepilze.

Beispielhaft - ohne jedoch zu limitieren - seien die folgenden Mikroorganismen genannt:

Chaetomium globosum, Glenospora graphii, Humicola gisea, Petriella setifera, Trichurus spiralis und Lecythophora mutabilis sowie gegen Trichoderma viride, Stachybotrys cartarum, Chephalosporium sp. und Acremonium sp. Coniophora puteana, Coriolus versicolor, Gloeophyllum abietinum, Gloeophyllum trabeum, Lentinus tigrinus, Poria monticola, Poria placenta, Serpula lacrymans, Stereum sanguinolentum, Tyromyces palustris.

Im Holzschutz spielen neben holzerstörenden Basidiomyceten und Moderfäulepilzen auch holzverfärbende Pilze sowie Schadinsekten ein Rolle. Neben Moderfäulepilze können unter feuchten Bedingungen auch Bakterien wie z.B. Caldocellulosiruptor sp., Anaerocellum sp., Clostridium-Arten wie Clostridium cellulovorans, Clostridium aldrichii, Cellulomonas-Species, Streptomyceten , Micromonospora sp., Thermomonospora sp., Microbispora sp. sowie Cytophaga und Sporocytophaga-Arten entscheidend zum Abbau von Cellulose beitragen.

Die verwendungsgemäßen synergistischen Mischungen können um das Wirkspektrum zu vergrößern oder besondere Effekte zu erzielen, mit mindestens einem weiteren mikrobiziden Wirkstoff kombiniert werden. Insbesondere kann die synergistische Mischung mindestens einen weiteren Wirkstoff aus der Reihe der Fungizide, insbesondere Bläuefungizide, Insektizide und antibakteriell wirksamen Verbindungen enthalten.

Bevorzugt sind insbesondere Kombinationen der verwendungsgemäßen Mischungen mit einer oder mehrerer der folgenden fungiziden Komponenten: Dichlofluanid, Tolylfluanid, Carbendazim, Fenpropimorph, Bethoxazin, Thiocyanato-methylthiobenzothiazol, 3-Iod-2-propinyl-n-butylcarbamat, Zink-Pyrithion, Kupfer-Pyrithion, N-(3-aminopropyl)-N-dodecylpropan-1,3-diamin.

Insbesondere bevorzugt sind Kombinationen der verwendungsgemäßen Mischungen mit einer oder mehrerer der folgenden fungiziden Komponenten: Dichlofluanid, Tolylfluanid, Bethoxazin, 3-Iod-2-propinyl-butylcarbamat, Zink- und Kupfer-Pyrithion.

Bevorzugt sind ebenfalls Kombinationen der verwendungsgemäßen Mischungen mit einer oder mehrerer der folgenden insektiziden und termitiziden Komponenten:

Acetamiprid, Allethrin, Alpha-cypermethrin, Beta-cyfluthrin, Bifenthrin, Bioallethrin, 4-Chlor-2-(2-chlor-2-methylpropyl)-5-[(6-iod-3-pyridinyl)methoxy]-3(2H)-pyridazinone (CAS-RN: 120955-77-3), Chlorfenapyr, Chlorpyrifos, Clothianidin, Cyfluthrin, Cyhalothrin, Cypermethrin, Deltamethrin, Etofenprox, Fenoxycarb, Fipronil, Flufenoxuron, Hexaflumuron, Imidacloprid, Nitenpyram, Permethrin, Pyriproxifen, Silafluofen, Tebufenozide, Thiacloprid, Thiamethoxam, Tralomethrin, Triflumuron.

Besonders bevorzugt sind Kombinationen der verwendungsgemäßen Mischungen mit einem oder mehreren der folgenden Termitizide:

Bifenthrin, Chlorfenapyr, Clothianidin, Cyfluthrin, Cypermethrin, Deltamethrin, Etofenprox, Imidacloprid, Permethrin, Thiacloprid, Thiamethoxam.

Insbesondere bevorzugt sind Kombinationen der erfindungsgemäßen Mischungen mit einem oder mehreren der folgenden Termitizide:

Bifenthrin, Clothianidin, Imidacloprid, Permethrin, Thiacloprid.

Ebenfalls bevorzugt sind Kombinationen der verwendungsgemäßen Mischungen mit einer oder mehrerer der folgenden bakteriziden Komponenten:

Benzylalkoholmono-(poly)-hemiformal, Ethylenglycol-hemiformal, N-(2-Hydroxypropyl)-aminomethanol, N-Methylisothiazolin-3-on, 5-Chlor-N-methylisothiazolin-3-on, 4,5-Benzisothiazolinone, Formaldehyd, Glutardialdehyd, Benzalkoniumchlorid, Benzyldimethyltetradecylammoniumchlorid, Benzyldimethyldodecylammoniumchlorid, 3-Methyl-4-chlorphenol sowie 2-Benzyl-4-chlorphenol und deren Alkali- und Erdalkalisalze, p-Hydroxybenzoesäureester sowie o-Phenylphenol und deren Alkali- und Erdalkalisalze, Bronopol, 2,2-Dibrom-3-nitril-propionamid und Silberverbindungen.

Bevorzugt sind Kombinationen der verwendungsgemäßen Mischungen mit einer oder mehrerer der folgenden Bakterizide:

Benzylalkoholmono-(poly)-hemiformal, N-Methylisothiazolin-3-on, 5-Chlor-N-methylisothiazolin-3-on, 4,5-Benzisothiazolinone, Glutardialdehyd, Benzalkoniumchlorid, Bronopol, 3-Methyl-4-chlorphenol sowie 2-Benzyl-4-Chlorphenol und die Alkali- und Erdalkalisalze, o-Phenylphenol und deren Alkali- und Erdalkalisalze und Silberverbindungen.

Ganz besonders bevorzugt sind Kombinationen der verwendungsgemäßen Mischungen mit einer oder mehrerer der folgenden Bakterizide:

Benzylalkoholmono-(poly)-hemiformal, 4,5-Benzisothiazolinone, Benzalkoniumchlorid, Bronopol, 3-Methyl-4-chlorphenol sowie 2-Benzyl-4-chlorphenol und deren Natrium- und Kaliumsalze, o-Phenylphenol und die Natrium- und Kaliumsalze und Silber(I)verbindungen.

Die verwendungsgemäßen Mischungen enthalten im allgemeinen 0.01 - 85 Gewichtsprozent Prochloraz, 0.01 - 85 Gewichtsprozent Tebuconazole und ggfs. 0.05 - 80 Gewichtsprozent mindestens eines weiteren mikrobiziden Wirkstoffs, insbesondere aus der Reihe der oben genannten Fungizide, Insektizide, Termitizide und Bakterizide.

Vorzugsweise enthalten die verwendungsgemäßen Mischungen 0.1 - 40 Gewichtsprozent Prochloraz, 0.1 - 40 Gewichtsprozent Tebuconazole und ggfs. 0.1 - 30 Gewichtsprozent mindestens eines weiteren mikrobiziden Wirkstoffs, insbesondere aus der Reihe der oben genannten Wirkstoffe.

Die verwendungsgemäßen Mischungen können in bekannter Weise hergestellt werden, zum Beispiel indem man die Wirkstoffe in einer geeigneten Apparatur mahlt und/oder mischt und/oder granuliert. Ebenso ist es möglich, die Wirkstoffe einzeln oder gemeinsam in einem geeigneten Lösungsmittel gegebenenfalls unter Zugabe weiterer Hilfs- und Zuschlagstoffe wie z.B. Emulgatoren zu lösen, zu dispergieren oder zu emulgieren und gegebenenfalls aus diesem durch Zugabe eines weiteren Lösungsmittels auszufällen oder gegebenenfalls das Lösungsmittel bis zur Trockene abzudestillieren. Sowohl die zur Herstellung der verwendungsgemäßen Mischungen eingesetzten Einzelwirkstoffe als auch die fertigen Wirkstoffmischungen können in Abhängigkeit von ihren jeweiligen physikalischen und/oder chemischen Eigenschaften in die üblichen Formulierungen überführt werden, wie Lösungen, Emulsionen, Suspensionen, Pulver, Schäume, Pasten, Granulate, Aerosole und Feinstverkapselungen in polymeren Stoffen.

Die verwendungsgemäßen Mischungen können auch als mikrobizide Mittel eingesetzt werden, enthaltend eine synergistisch wirksame Menge an Prochloraz und Tebuconazole sowie mindestens ein Verdünnungs- oder Lösungsmittel, gegebenenfalls weitere Hilfs- und Zusatzstoffe sowie gegebenenfalls mindestens einen weiteren genannten Wirkstoff.

Die Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoffkombination, vorzugsweise zwischen 0,5 und 50 Gewichtsprozent.

Die zum Schutz von Holz, Holzwerkstoffen und Holz-Plastik-Verbundstoffen verwendeten mikrobiziden Mittel oder Konzentrate enthalten den Wirkstoff bzw. die Wirkstoffkombination in einer Konzentration von 0,005 bis 95 Gewichtsprozent, insbesondere 0,1 bis 50 Gewichtsprozent.

Die Anwendungskonzentrationen der zu verwendenden Wirkstoffe bzw. der Wirkstoffkombinationen richten sich nach der Art und dem Vorkommen der zu bekämpfenden Mikroorganismen sowie nach der Zusammensetzung des zu schützenden Materials. Die optimale Einsatzmenge kann durch Testreihen ermittelt werden. Im allgemeinen liegen die Anwendungskonzentrationen im Bereich von 0,001 bis 10 Gewichtsprozent, vorzugsweise von 0,01 bis 5 Gewichtsprozent, bezogen auf das zu schützende Material.

Die verwendungsgemäßen Wirkstoffkombinationen bzw. Mittel ermöglichen in vorteilhafter Weise, die bisher verfügbaren mikrobiziden Mittel durch effektivere zu ersetzen. Sie zeigen eine gute Stabilität und haben in vorteilhafter Weise ein breites Wirkungsspektrum.

Unter Holz, Holzwerkstoffen und Holzplastikverbundstoffen, welches durch die erfindungsgemäßen Wirkstoffmischungen bzw. diese enthaltene Mittel geschützt werden kann, ist beispielhaft zu verstehen: Bauholz, Holzbalken, Eisenbahnschwellen, Brückenteile, Bootsstege, Holzfahrzeuge, Kisten, Paletten, Container, Telefonmasten, Holzverkleidungen, Holzfenster und -türen, Sperrholz, Mitteldichte Faserplatten (MDF), Spanplatten, Oriented Strand Board (OSB), Waferboard, Laminated Veneer Lumber (LVL) oder Holzprodukte, die ganz allgemein beim Hausbau oder in der Bautischlerei Verwendung finden sowie Holzplastik-Verbundstoffe.

Die Wirkstoffe können einzeln oder als fertige Mischung, in Form ihrer Formulierungen oder den daraus bereiteten Anwendungsformen, wie gebrauchsfertige Lösungen, Suspensionen, Pasten, lösliche Pulver angewendet werden. Die Anwendung geschieht in üblicher Weise, indem man das Holz, Holzwerkstoffen und Holz-Plastik-Verbundstoffen mit den Einzelwirkstoffen oder der fertigen Mischung oder mit einer daraus hergestellten Formulierung oder Anwendungsform behandelt. Bei zu schützendem Holz, Holzwerkstoffen oder Holz-Plastik-Verbundstoffen erfolgt die Anwendung nach üblichen Verfahren z.B. durch Sprüh-, Streich-, Tauch-, großtechnische Imprägnierverfahren, z.B. Vakuum-, Doppelvakuum- oder Druckverfahren und durch Zugabe zum Leim oder durch Zugabe über den Compounder oder Mischer sowie über Materbatches.

Ein besonders effektiver Holzschutz wird durch großtechnische Imprägnierverfahren, z.B. Vakuum, Doppelvakuum oder Druckverfahren erzielt.

Gegenstand der vorliegenden Erfindung ist weiterhin ein Verfahren zum Schutz von Holz und Holzwerkstoffen wobei das Holz bzw. der Holzwerkstoff mit einer synergistisch wirksame Menge an Prochloraz und Tebuconazole und mindestens einem Verdünnungs- oder Lösungsmittel, gegebenenfalls weiterer Hilfs- und Zusatzstoffe sowie gegebenenfalls mindestens einem weiteren genannten Wirkstoff mittels Streich-, Sprüh-, Vakuum-, Doppelvakuum-, Druck-oder Tauchverfahren imprägniert wird. Dabei können die Wirkstoffe Prochloraz und Tebuconazole entweder einzeln oder als fertige Mischung zur Anwendung kommen.

**Biologische Beispiele**

Nach der von Kull et al. (F.C. Kull, P.C. Eismann, H.D. Sylvestrowicz, R.L. Mayer, Applied Microbiology 9, 538 bis 541, 1961) beschriebenen Methode wurde dann der Synergismus ermittelt. Dabei gelten folgende Beziehungen:

$$QA/Qa + QB/Qb = SI$$

Qa = Konzentration von Substanz A, welche die MHK darstellt

Qb = Konzentration von Substanz B, welche die MHK darstellt

QA = Konzentration von Substanz A in der Konzentration von A/B, die das Mikrobenwachstum unterbindet

QB = Konzentration von Substanz B in der Konzentration von A/B, die das Mikrobenwachstum unterbindet

SI = Synergistischer Index

SI = 1 bedeutet Additivität

SI > 1 bedeutet Antagonismus

SI < 1 bedeutet Synergismus

**Beispiel 1:**

Verschiedene Konzentrationen von Prochloraz (A), Tebuconazole (B) und Mischungen der beiden genannten Wirkstoffe (AB) wurden gegen den Soft Rot-Verursacher *Trichurus spiralis* auf Nähragarmedien geprüft. Die minimale Hemmkonzentration (MHK) bezeichnet den Wert des betreffenden Wirkstoffes bzw. Wirkstoffgemisches, an dem kein Wachstum beobachtet werden konnte.

| Wirkstoff | Mischungsverhältnis | MHK [ppm] | SI |
|---|---|---|---|
| A | | 5 | |
| A:B | 9:1 | 5 | 0,9 |
| A:B | 8:2 | 5 | 0,8 |
| A:B | 7:3 | 5 | 0,7 |
| A:B | 3:2 | 5 | 0,61 |
| A:B | 1:1 | 5 | 0,51 |
| A:B | 2:3 | 5 | 0,42 |
| A:B | 3:7 | 5 | 0,32 |
| A:B | 1:4 | 5 | 0,22 |
| B | | 200 | |

Aus den ermittelten Index-Daten geht hervor, dass die erfindungsgemäße Kombination von Prochloraz mit Tebuconazole über weite Bereiche einen ausgeprägten Synergismus gegen Soft Rot aufweist.

**Beispiel 2:**

Verschiedene Konzentrationen von Prochloraz (A), Tebuconazole (B) und Mischungen (AB) der beiden genannten Wirkstoffe wurden gegen den holzzerstörenden Basidiomyceten *Coriolus versicolor* geprüft. Aus einer Kolonie des Holzdestruenten wurden Mycelstücke ausgestochen und auf einem Malzextrakt-peptonhaltigen Nähragar bei 26°C inkubiert. In der Folge wurde das radiale Hyphenwachstum mit und ohne Wirkstoffzusatz verglichen. Als minimale Hemmkonzentration (MHK) wurde die niedrigste Wirkstoffkonzentration in Folge angegeben, welche das radiale Wachstum völlig unterdrückt.

| Wirkstoff | Mischungsverhältnis | MHK [ppm] | SI |
|---|---|---|---|
| A | | 6 | |
| A:B | 9:1 | 0,5 | 0,24 |
| A:B | 8:2 | 0,3 | 0,24 |
| A:B | 7:3 | 0,3 | 0,33 |
| A:B | 3:2 | 0,3 | 0,43 |
| A:B | 1:1 | 0,3 | 0,53 |
| A:B | 2:3 | 0,3 | 0,62 |
| A:B | 3:7 | 0,3 | 0,71 |
| A:B | 1:4 | 0,3 | 0,81 |
| A:B | 1:9 | 0,3 | 0,91 |
| B | | 0,3 | |

Aus den ermittelten Index-Daten geht hervor, dass die erfindungsgemäße Kombination von Prochloraz mit Tebuconazole über weite Bereiche hinweg einen ausgeprägten Synergismus gegen den holzzerstörenden Basidiomyceten *Coriolus versicolor* aufweist.

**Formulierungsbeispiele:**

**Beispiel 1** (Technisches Konzentrat):

10 % Prochloraz, 10 % Tebuconazole, 9 % Natriumrhizinolat-/Natriumdodecylbenzolsulfonat-Zubereitung, 25 % ethoxyliertes Rhizinusöl, 46 % Texanol

**Beispiel 2** (Emulgierbares Konzentrat):

2.5 % Tebuconazole, 2.5 % Prochloraz, 3 % Natriumrhizinolat-/Natriumdodecylbenzolsulfonat-Zubereitung, 27 % Fettsäurepolyethylenglykolether-ester, 65 % Texanol

**Patentansprüche**

1. Verwendung einer Mischung enthaltend eine synergistisch wirksame Menge der Wirkstoffe Prochloraz (N-propyl-N-[2-(2,4,6-trichlorophenoxy)ethyl]imidazol-1-carboxamide) und Tebuconazole ((±)-alpha-[2-(4-Chlorophenyl) ethyl]-.alpha.-(1,1-dimethylethyl)-1H-1,2,4-triazole-1-ethanol) zum Schutz von Holz, Holzwerkstoffen und Holz-Plastik-Verbundstoffen vor Befall und Zerstörung durch biologische Schädlinge.

2. Verwendung gemäß Anspruch 1, **dadurch gekennzeichnet dass** das Gewichtsverhältnis von Prochloraz zu Tebuconazole 1:99 bis 99:1 beträgt.

3. Verwendung gemäß wenigstens einem der Ansprüche 1 und 2, **dadurch gekennzeichnet, dass** die Mischung mindestens einen weiteren mikrobiziden Wirkstoff aus der Reihe der Fungizide, Insektizide, Termitizide und antibakteriell wirksamen Verbindungen enthält.

4. Verwendung gemäß wenigstens einem der Ansprüche 1 bis 3, **dadurch gekennzeichnet, dass** die Mischung als weiteren mikrobiziden Wirkstoff mindestens eine Verbindung aus der Reihe Dichlofluanid, Tolylfluanid, Bethoxazin, 3-Iod-2-propinyl-butylcarbamat, Zink- oder Kupfer-Pyrithione, Bifenthrin, Chlorfenapyr, Clothianidin, Cyfluthrin, Cypermethrin, Deltamethrin, Etofenprox, Imidacloprid, Permethrin, Thiacloprid, Thiamethoxam, Benzylalkoholmono-(poly)-hemiformal, 4,5-Benzisothiazolinone, Benzalkoniumchlorid, Bronopol, 3-Methyl-4-chlorphenol sowie 2-Benzyl-4-chlorphenol und deren Natrium- und Kaliumsalze, o-Phenylphenol und die Natrium- und Kaliumsalze und Silber(I) enthält.

5. Verwendung gemäß wenigstens einem der Ansprüche 1 bis 4**, dadurch gekennzeichnet, dass** die Mischung 0.01 - 85 Gewichtsprozent Prochloraz, 0.01 - 85 Gewichtsprozent Tebuconazole und gegebenenfalls 0.05 - 80 Gewichtsprozent mindestens eines weiteren mikrobiziden Wirkstoffs aus der Reihe der Fungizide, Insektizide, Termitizide und antibakteriell wirksamen Verbindungen enthält.

6. Verfahren zum Schutz von Holz und Holzwerkstoffen sowie Holz-Plastikverbundstoffen vor Befall und Zerstörung durch biologische Schädlinge, **dadurch gekennzeichnet, dass** man das Holz oder den Holzwerkstoff oder den Holzplastikverbundstoff mit einer synergistisch wirksame Menge an Prochloraz und Tebuconazole und mindestens einem Verdünnungs- oder Lösungsmittel, gegebenenfalls weiteren Hilfs- und Zusatzstoffe sowie gegebenenfalls mindestens einem weiteren bioziden Wirkstoff mittels Streich-, Sprüh-, Vakuum-, Doppelvakuum-, Druck- oder Tauchverfahren oder durch Zugabe zum Leim oder durch Zugabe über den Compounder oder Mischer sowie über Masterbatches imprägniert.

7. Holz, Holzwerkstoff oder Holz-Plastik-Verbundstoff enthaltend eine Mischung enthaltend eine synergistisch wirksame Menge der Wirkstoffe Prochloraz (N-propyl-N-[2-(2,4,6-trichlorophenoxy)ethyl]imidazol-1-earboxamide) und Tebuconazole ((+)-alpha-[2-(4-Chlorophenyl)ethyl]-.alpha.-(1,1-dimethylethyl)-1H-1,2,4-triazole-1-ethanol).

**Claims**

1. Use of a mixture comprising a synergistically effective amount of the active compounds prochloraz (N-propyl-N-[2-(2,4,6-trichlorophenoxy)ethyl]imidazole-1-carboxamide) and tebuconazole ((±)-alpha-[2-(4-chlorophenyl) ethyl]-.alpha.-(1,1-dimethylethyl)-1H-1,2,4-triazole-1-ethanol) for protecting wood, timber products and wood/plastic composites against attack and destruction by biological pests.

**2.** Use according to Claim 1, **characterized in that** the weight ratio of prochloraz to tebuconazole is from 1:99 to 99:1.

**3.** Use according to at least one of Claims 1 and 2, **characterized in that** the mixture comprises at least one further microbicidally active compound from the group of the fungicides, insecticides, termiticides and antibacterially active compounds.

**4.** Use according to at least one of Claims 1 to 3, **characterized in that** the mixture comprises, as further microbicidally active compound, at least one compound from the group consisting of dichlofluanid, tolylfluanid, bethoxazin, 3-iodo-2-propynyl butylcarbamate, zinc pyrithione or copper pyrithione, bifenthrin, chlorfenapyr, clothianidin, cyfluthrin, cypermethrin, deltamethrin, etofenprox, imidacloprid, permethrin, thiacloprid, thiamethoxam, benzyl alcohol mono (poly)-hemiformal, 4,5-benzisothiazolinone, benzalkonium chloride, bronopol, 3-methyl-4-chlorophenol and 2-benzyl-4-chlorophenol and their sodium and potassium salts, o-phenylphenol and the sodium and potassium salts and silver(I).

**5.** Use according to at least one of Claims 1 to 4, **characterized in that** the mixture comprises 0.01 - 85 per cent by weight of prochloraz, 0.01 - 85 per cent by weight of tebuconazole and, if appropriate, 0.05 - 80 per cent by weight of at least one further microbicidally active compound from the group of the fungicides, insecticides, termiticides and antibacterially active compounds.

**6.** Method for protecting wood and timber products and wood/plastic composites against attack and destruction by biological pests, **characterized in that** the wood or the timber product or the wood/plastic composite is impregnated with a synergistically effective amount of prochloraz and tebuconazole and at least one diluent or solvent, if appropriate further auxiliaries and additives and also, if appropriate, at least one further biocidally active compound, by painting, spraying, vacuum, double vacuum, pressure or dipping processes or by addition to the glue or by addition via the compounder or mixer and also via masterbatches.

**7.** Wood, timber product or wood/plastic composite comprising a mixture comprising a synergistically effective amount of the active compounds prochloraz (N-propyl-N-[2-(2,4,6-trichlorophenoxy)ethyl]imidazole-1-carboxamide) and tebuconazole (($\pm$)-alpha-[2-(4-chlorophenyl)ethyl]-.alpha.-(1,1-dimethylethyl)-1H-1,2,4-triazole-1-ethanol).

**Revendications**

**1.** Utilisation d'un mélange contenant une quantité à effet synergique des substances actives prochloraz (N-propyl-N-[2-(2,4,6-trichlorophénoxy)éthyl]-imidazole-1-carboxamide) et tébuconazole (($\pm$)-alpha-[2-(4-chlorophényl) éthyl}-alpha-(1,1-diméthyléthyl)-1H-1,2,4-triazole-1-éthanol) pour la protection du bois, de matériaux dérivés du bois et de composites bois-matière plastique contre l'attaque et la destruction par des nuisibles biologiques.

**2.** Utilisation selon la revendication 1, **caractérisée en ce que** le rapport pondéral du prochloraz au tébuconazole va de 1:99 à 99:1.

**3.** Utilisation selon au moins l'une des revendications 1 et 2, **caractérisée en ce que** le mélange contient au moins une autre substance active microbicide choisie dans la série des fongicides, insecticides, termiticides et des composés à activité antibactérienne.

**4.** Utilisation selon au moins l'une des revendications 1 à 3, **caractérisée en ce que** le mélange contient comme autre substance active microbicide au moins un composé choisi dans l'ensemble constitué par le dichlofluanide, le tolylfluanide, la béthoxazine, le carbamate de 3-iodo-2-propynyl-butyle, les pyrithiones de cuivre ou de zinc, la bifenthrine, le chlorfénapyr, la clothianidine, cyfluthrine, la cyperméthrine, la deltaméthrine, l'étofenprox, l'imidaclopride, la perméthrine, le thiaclopride, le thiaméthoxam, le mono-(poly)-hémiformal d'alcool benzylique, la 4,5-benzisothiazolinone, le chlorure de benzalkonium, le bronopol, le 3-méthyl-4-chlorophénol ainsi que le 2-benzyl-4-chlorophénol et leurs sels de sodium et de potassium, l'o-phénylphénol et les sels de sodium et de potassium et l'argent-(I).

**5.** Utilisation selon au moins l'une des revendications 1 à 4, **caractérisée en ce que** le mélange contient 0,01 - 85 % en poids de prochloraz, 0,01 - 85 % en poids de tébuconazole et éventuellement 0,05 - 80 % en poids d'au moins une autre substance active microbicide choisie dans la série des fongicides, insecticides, termiticides et des composés à activité antibactérienne.

6. Procédé pour la protection du bois, de matériaux dérivés du bois et de composites bois-matière plastique contre l'attaque et la destruction par des nuisibles biologiques, **caractérisé en ce qu'**on imprègne le bois ou le matériau dérivé du bois ou le composite bois-matière plastique avec une quantité à effet synergique de prochloraz et tébuconazole et d'au moins un solvant ou diluant, éventuellement d'autres adjuvants et additifs ainsi qu'éventuellement d'au moins une autre substance active biocide, par des procédés d'enduction, de pulvérisation, sous vide, sous double-vide, sous pression ou par trempage, ou par addition à la colle ou par addition au moyen de l'appareil de compoundage ou du mélangeur, ainsi qu'à l'aide de mélanges-maîtres.

7. Bois, matériau dérivé du bois ou composite bois-matière plastique, comportant un mélange contenant une quantité à effet synergique des substances actives prochloraz (N-propyl-N-[2-(2,4,6-trichlorophénoxy)éthyl]imidazole-1-carboxamide) et tébuconazole ((±)-alpha-[2-(4-chlorophényl)éthyl}-alpha-(1,1-diméthyléthyl)-1H-1,2,4-triazole-1-éthanol).

**EP 1 885 532 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 254857 A
- EP 554833 A
- EP 1025967 A
- DE 3522788 A
- NZ 331830 A

**In der Beschreibung aufgeführte Nicht-Patentliteratur**

- **J.A. Drysdale et al.** *New Zealand Journal of Forestry Science,* 1982, vol. 12 (3), 457-466
- **F.C. Kull ; P.C. Eismann ; H.D. Sylvestrowicz ; R.L. Mayer.** *Applied Microbiology,* 1961, vol. 9, 538-541